# EUROPÄISCHE PATENTANMELDUNG

(11) **EP 2 146 272 A1**
(43) Veröffentlichungstag der Anmeldung: **20.01.2010**
(21) Anmeldenummer: 08012870.5
(22) Anmeldetag: 16.07.2008
(51) Int. Cl.: G06F 3/048, H04L 29/08, G05B 19/418

(54) **Umsetzen einer Remote Desktop Protocol Session und deren Darstellung auf mehreren Bildschirmen**

(71) Anmelder: Pepperl + Fuchs GmbH, 68307 Mannheim (DE)
(72) Erfinder: Adler, Sven, 73733 Esslingen (DE); Sittel, Stefan, 71229 Leonberg (DE)
(74) Vertreter: Schiffer, Axel Martin

(57) **Zusammenfassung**

Die vorliegende Erfindung betrifft ein Computernetzwerk mit einer ersten, einer zweiten und einer dritten Recheneinheit. Diese Recheneinheiten sind für einen Datenaustausch untereinander über ein informationstechnisches Netzwerk verbunden. Auf der ersten Recheneinheit ist ein RDP-Server und auf der zweiten Recheneinheit ein RDP-Client vorgesehen, wobei die erste und die zweite Recheneinheit zum Aufbau und zum Betrieb einer RDP-konformen ersten Client-Server-Verbindung eingerichtet sind. Dieses Computernetzwerk ist dadurch weitergebildet, dass die zweite Recheneinheit einen Server für ein zweites Terminalserverprotokoll aufweist und auf der dritten Recheneinheit ein Client für das zweite Terminalserverprotokoll läuft. Ferner ist die zweite und die dritte Recheneinheit zum Aufbauen und zum Betrieb einer zweiten Client-Server-Verbindung basierend auf dem zweiten Terminalserverprotokoll eingerichtet, wobei die zweite Recheneinheit zum Übertragen von Informationen, welche von der ersten Recheneinheit zu der zweiten Recheneinheit über die erste Client-Server-Verbindung übertragen werden, über die zweite Client-Server-Verbindung zu der dritten Recheneinheit eingerichtet ist. Die Erfindung betrifft außerdem ein Verfahren zum Betrieb eines Computernetzwerkes.

## Beschreibung

Die vorliegende Erfindung betrifft gemäß einem ersten Aspekt ein Computernetzwerk gemäß dem Oberbegriff des Anspruchs 1.

In einem zweiten Gesichtspunkt bezieht sich die Erfindung auf ein Verfahren zum Betrieb eines Computernetzwerkes gemäß dem Oberbegriff des Anspruchs 9.

Gattungsgemäße Computernetzwerke weisen eine erste, eine zweite und eine dritte Recheneinheit auf. Es ist ein informationstechnisches Netzwerk vorgesehen, über welches ein Datenaustausch, zumindest zwischen der ersten und der zweiten sowie zwischen der zweiten und der dritten Recheneinheit möglich ist. Auf der ersten Recheneinheit ist ein RDP-Server installiert. Auf der zweiten Recheneinheit läuft ein RDP-Client. Hierbei sind die erste und die zweite Recheneinheit so ausgeführt, dass sie einen Aufbau und den Betrieb einer RDP-konformen ersten Client-Server-Verbindung ermöglichen.

Das Remote Desktop Protokoll, im Folgenden RDP genannt, ist eine bekannte Möglichkeit zum Implementieren von Terminaldiensten. Bei RDP müssen mindestens zwei Recheneinheiten, welche auch als Systeme bezeichnet werden können, vorgesehen sein. Hierbei fungiert ein System als Terminalserver. Das zweite System wird als so genannter Terminalclient verwendet. Mit RDP ist es möglich, dass der Terminalserver eine Bildschirmausgabe auf dem Terminalclient erzeugt. Außerdem können Nutzerinterfaceeingaben, wie eine Maus- oder Tastatureingabe, von dem Terminalserver über den Terminalclient entgegengenommen werden. Der Terminalclient fungiert also unabhängig von seiner exakten Hardwareausführung lediglich als Ein- und Ausgabemedium beziehungsweise Schnittstelle für Prozesse, die auf dem Terminalserver ablaufen.

Bis vor kurzem wurden derartige Terminalserver-Systeme hauptsächlich im Rahmen der Informationsverarbeitung für Büros, beispielsweise bei Banken, eingesetzt. Mittlerweile werden HMI-Lösungen (Humane Machine Interface), welche auf RDP basieren, auch in der Prozessautomatisierung verwendet. Hierdurch verspricht man sich einen leichteren und günstigeren Austausch von Visualisierungsdaten und Befehlen.

Jedoch stellt das Verwenden von Terminalclients, die in industriellen Umgebungen eingesetzt werden, andere, zum Teil erweiterte Anforderungen an die Clients beziehungsweise das gesamte System selbst, als dies in einer Büroumgebung notwendig ist. Beispielsweise werden Terminalclients verwendet, um im Feld Prozessabbilder darstellen und bearbeiten zu können. Hieraus ergeben sich erhöhte Anforderungen an die Hardware der Terminalclients wie auch an die Funktionalität. Bei einem Einsatz, beispielsweise in einem explosionsgeschützten Bereich, muss bei der Verwendung der Hardware sichergestellt werden, dass keine zündfähigen Funken entstehen. Außerdem müssen die entsprechenden Geräte extra zertifiziert werden, wodurch ein Einsatz von Standardkomponenten meist nicht möglich ist.

Ein Beispiel für eine weitere softwarebasierte Anforderung, die durch das Verwenden von Terminalclients in der Prozessautomatisierung auftritt, ist, dass Informationen, welche auf einem Terminalclient dargestellt werden, auf mehreren dieser Clients dargestellt werden sollen. Auch soll über jeden dieser Clients eine Eingabe von Daten möglich sein. Diese Anforderung wird verdeutlicht, wenn berücksichtigt wird, dass beispielsweise chemische Anlagen eine Länge von 40 m bis 100 m aufweisen können. Hierbei soll es an verschiedenen Stellen der chemischen Anlage möglich sein, die aktuellen Daten der Anlage auszulesen oder auf die Prozesse, welche in der chemischen Anlage ablaufen, Einfluss zu nehmen. Hierfür wird ein so genanntes Mirroring der Session, welche auf einem Terminalclient läuft, benötigt. Hierbei ist unter Mirroring zu verstehen, dass alle Ein- und Ausgaben dieser Session parallel auf mindestens zwei verschiedenen Recheneinheiten, die als Terminalclient fungieren können, möglich sind.

Allerdings wird ein derartiges Mirroring, was auch als Session-Spiegeln bezeichnet werden kann, durch das RDP nicht unterstützt. Es sind jedoch andere Terminalserverprotokolle bekannt, die diese Funktionalität aufweisen. Allerdings sind sie nicht derart verbreitet wie das RDP. Durch die geringe Verbreitung und Bekanntheit dieser alternativen Terminalserverprotokolle ist es von Betreibern der Anlagen oft nicht gewünscht, diese auf ihren zentralen Servern alternativ oder parallel zu RDP-Servern zu installieren. Auch ist es aus sicherheitstechnischen Gründen oft nicht gewünscht, weitere Software auf zentralen Servern zu installieren.

Eine weitere Anforderung, die sich vor allem durch den industriellen Einsatz von Terminalclients ergibt ist, dass, bedingt durch die hohe Komplexität der abzubildenden Prozessbilder oft ein Bildschirm der Hardware eines Terminalclients hierfür nicht mehr ausreicht. Hierzu ist es zwar bekannt, ein so genanntes Desktop-Spanning einzusetzen, wobei über eine Recheneinheit mehrere Bildschirme betrieben werden. Auf diesen Bildschirmen wird dann der sogenannte erweiterte Desktop dargestellt. Da jedoch bei der Prozessautomatisierung, insbesondere im explosionsgeschützten Bereich, nur speziell zugelassene Recheneinheiten verwendet werden dürfen, würde dies eine teure Neuentwicklung mit sich ziehen, da die herkömmlichen Recheneinheiten für Terminalclients lediglich einen Bildschirm sowie eine dafür vorgesehene Grafikverarbeitung aufweisen. In nicht explosionsgeschützten Bereichen kann dies einfach durch eine weitere Grafikkarte in der Hardware des Terminalclients realisiert werden. Diese Veränderung der Hardware ist aus den beschriebenen Gründen allerdings bei der Hardware von speziellen für explosionsgeschützte Bereiche zugelassenen Terminalclients nicht möglich.

Zwar unterstützt RDP die Konfiguration und Verarbeitung von erweiterten Desktops, jedoch bietet RDP keine Lösung für das beschriebene Problem, da es ursprünglich nicht für die Verwendung in einer industriellen Umgebung entwickelt wurde.

Eine **Aufgabe** der Erfindung ist es, ein Computernetzwerk zu schaffen, welches die Funktionalität des RDP ergänzt, ohne in das RDP einzugreifen. Außerdem soll ein Verfahren zum Betrieb eines derartigen Computernetzwerkes bereitgestellt werden.

Diese Aufgabe wird in einem ersten Gesichtspunkt der Erfindung durch ein Computernetzwerk mit den Merkmalen des Anspruchs 1 gelöst.

In einem weiteren Aspekt der Erfindung wird die Aufgabe durch ein Verfahren zum Betrieb eines Computernetzwerkes gemäß den Merkmalen des Anspruchs 9 gelöst.

Weitere vorteilhafte Ausführungsformen sind in den abhängigen Ansprüchen, der Beschreibung sowie den Figuren und deren Erläuterungen angegeben.

Ein gattungsgemäßes Computernetzwerk wird erfindungsgemäß dadurch weitergebildet, dass die zweite Recheneinheit einen Server für ein zweites von RDP verschiedenes Terminalserverprotokoll aufweist und die dritte Recheneinheit als Client für das zweite Terminalserverprotokoll konfiguriert ist. Ferner sind die zweite und die dritte Recheneinrichtung zum Aufbau und zum Betrieb einer zweiten Client-Server-Verbindung, basierend auf dem zweiten Terminalserverprotokoll eingerichtet. Außerdem ist die zweite Recheneinheit zum Übertragen von Informationen, welche von der ersten Recheneinheit zu der zweiten Recheneinheit über die erste Client-Server-Verbindung übertragen werden, über die zweite Client-Server-Verbindung zur dritten Recheneinheit eingerichtet.

Ein Grundgedanke der Erfindung kann darin gesehen werden, die Funktionalität des RDP durch die Verwendung eines zweiten Terminalserverprotokolls zu ergänzen. Es ist jedoch unerwünscht, den Server für das zweite Terminalserverprotokoll ebenfalls auf der ersten Recheneinheit, welche meist ein zentraler Server ist, zu installieren und laufen zu lassen. Daher wird dieser Server für das zweite Terminalserverprotokoll auf der zweiten Recheneinheit vorgesehen. Auf der dritten Recheneinheit läuft dann zwar wiederum ein Terminalclient wie auf der zweiten Recheneinheit, jedoch nicht entsprechend RDP sondern nach dem eingesetzten zweiten Terminalserverprotokoll.

Bei der Auswahl des zweiten Terminalserverprotokolls wird darauf geachtet, dass dieses die zusätzliche Funktionalität, welche durch RDP nicht gegeben ist, ermöglicht. Wird beispielsweise ein Session Mirroring gefordert, so können das VNC-Protokoll oder NetOP verwendet werden. Selbstverständlich sind auch andere Terminalserverprotokolle, welche die gewünschte Funktionalität aufweisen, einsetzbar.

Zwischen der zweiten und der dritten Recheneinrichtung wird mit dem verwendeten Protokoll eine zweite Client-Server-Verbindung aufgebaut. Hierdurch ist es möglich, Daten und Informationen, welche von der zweiten Recheneinheit über die erste Client-Server-Verbindung, die nach dem RDP betrieben wird, auch an die dritte Recheneinheit zu übertragen.

In einer bevorzugten Ausführungsform sind die zweite und dritte Recheneinheit als Thin-Clients ausgeführt. Eine andere Möglichkeit ist, anstelle eines Thin-Clients einen so genannten Fat-Client einzusetzen. Da zwischen diesen beiden Client Arten die Unterschiede fließend sind, ist ein exaktes Einteilen des verwendeten Systems oft nur schwer möglich. Ein Thin-Client selbst weist oft kein eigenes Betriebssystem auf, sondern hat nur eine sehr abgespeckte BIOS-Variante. Beim Starten werden das Betriebssystem sowie alle anderen Programme von einem zentralen Server, der hier durch die erste Recheneinheit realisiert wird, geladen. Beim Fat-Client sind auf dem Client beispielsweise zusätzliche Speichereinrichtungen vorhanden, so dass nicht mehr alle Informationen über das Netzwerk beim Start nachgeladen werden müssen.

Welches zweite Serverterminalprotokoll verwendet wird, hängt von der geforderten Funktionalität, mit der das RDP ergänzt werden soll, ab. Ist beispielsweise gefordert, dass ein Session Mirroring möglich sein soll, so wird ein zweites Serverprotokoll ausgewählt, das ein Spiegeln einer auf der zweiten Recheneinheit laufenden Session ermöglicht. Hierbei ist es bevorzugt, wenn diese Session nicht nur auf die dritte Recheneinheit sondern auf eine beliebige Anzahl von weiteren Recheneinheiten gespiegelt werden kann. So ist es möglich, beispielsweise bei einem chemischen Reaktor mit einer Länge von 100 oder mehr Metern beispielsweise alle 25 m eine Ein- und Ausgabemöglichkeit vorzusehen. So können die Parameter des Reaktors an unterschiedlichen Stellen eingesehen und verändert werden.

Soll das RDP derart erweitert werden, dass die Funktionalität eines erweiterten Desktops durch zwei Recheneinheiten erreicht wird, so ist es vorgesehen, dass die zweite Recheneinheit zwei Grafikverarbeitungseinrichtungen aufweist. Hierbei ist es zum einen möglich, dass die zwei Grafikverarbeitungseinrichtungen physikalisch in der zweiten Recheneinheit vorhanden sind. Eine andere Möglichkeit ist es, auf der zweiten Recheneinheit eine Grafikverarbeitungseinrichtung zu emulieren. Unter Grafikverarbeitungseinrichtungen im Sinn der Erfindung kann die Funktionalität einer Grafikkarte mit den entsprechenden Grafikchipsätzen verstanden werden. Beim Emulieren einer Grafikverarbeitungseinrichtung ist es besonders wichtig, dass der Grafikpuffer, von dem aus ein Bildschirm versorgt wird, emuliert dargestellt wird. Ein Teil der Verarbeitung der emulierten Grafikverarbeitungseinrichtung kann auch durch die vorhandene Grafikverarbeitungseinrichtung durchgeführt werden, sofern diese die zusätzliche Rechenkapazität hierfür aufweist.

Um die geforderte Funktionalität eines erweiterten Desktops auf mindestens zwei Recheneinheiten zu erreichen, ist vorgesehen, dass die zweite und die dritte Recheneinheit zum Verwenden eines Bildschirms der dritten Recheneinheit als weiteren Bildschirm für die zweite Recheneinheit ausgelegt sind. Außerdem ist die zweite Client-Server-Verbindung derart eingerichtet, dass die für das Verwenden des Bildschirms der dritten Recheneinheit als weiterer Bildschirm für die zweite Recheneinheit benötigten Daten übertragen werden können.

Dies kann beispielsweise derart realisiert werden, dass die zweite Recheneinheit von der ersten Recheneinheit einen erweiterten Desktop anfordert. Diese Anforderung läuft über die erste Client-Server-Verbindung. Im Folgenden wird angenommen, dass der erweiterte Desktop zur Darstellung auf zwei Bildschirmen ausgelegt ist. Grundsätzlich ist es jedoch auch möglich, eine Darstellung auf mehr als zwei Bildschirmen anzufordern und auszuführen.

Die zweite Recheneinheit analysiert die Daten und Informationen, welche sie zu dem erweiterten Desktop über die erste Client-Server-Verbindung erhalten hat. Einen Teil des erweiterten Desktops stellt die zweite Recheneinheit auf ihrem eigenen Bildschirm dar. Hierzu wird eine erste Grafikverarbeitungseinrichtung in der zweiten Recheneinheit verwendet. Für die Darstellung eines zweiten Teils des erweiterten Desktops wird ein Bildschirm der dritten Recheneinheit verwendet. Hierzu bereitet die zweite Recheneinheit die Daten für den weiteren Teil des erweiterten Desktops in einer zweiten Grafikverarbeitungseinrichtung auf. Wie bereits ausgeführt, kann diese Grafikverarbeitungseinrichtung sowohl physikalisch vorliegen, wie auch lediglich softwarebasierend auf der zweiten Recheneinheit emuliert werden. Die aufbereiteten Daten der zweiten Grafikverarbeitungseinrichtung werden über die die zweite Client-Server-Verbindung an die dritte Recheneinheit versendet. Der Client für das zweite Terminalserverprotokoll auf der dritten Recheneinheit stellt anschließend die empfangenen Daten auf dem Bildschirm dar. Werden nun die zweite oder dritte Recheneinheit nebeneinander platziert, so können die beiden Bildschirme als erweiterter Desktop betrachtet werden.

Da nicht nur die Ausgabe der Daten des erweiterten Desktops auf den Bildschirmen der zweiten und der dritten Recheneinheit möglich sein soll, sondern auch die Eingabe von Daten, ist es vorgesehen, dass die erste und die zweite Recheneinheit zum Be- und Verarbeiten von Daten für einen erweiterten Desktop über die erste Client-Server-Verbindung ausgeführt sind. Die zweite und die dritte Recheneinheit sind ebenfalls zum Be- und Verarbeiten, zumindest eines Teils der Daten für den erweiterten Desktop über die zweite Client-Server-Verbindung ausgelegt. Hierdurch sind auch Eingaben von Daten auf dem erweiterten Desktop auf der zweiten und der dritten Recheneinheit möglich.

Die erste, zweite und die dritte Recheneinheit sind durch ein informationstechnisches Netzwerk verbunden. Dieses kann beispielsweise Ethernet basierend ausgeführt sein. Demnach ist keine direkte Verbindung der Recheneinheiten untereinander notwendig, sondern die Verbindung kann über ein Switch oder andere Netzwerkteile erfolgen. Als Netzwerkprotokoll kann beispielsweise TCP/IP eingesetzt werden. Abhängig von den zusätzlich verwendeten Terminalserverprotokollen können auch andere Netzwerkprotokolle, zumindest für die Teile des Netzwerkes, die zum Aufbau und zum Aufrechterhalten der zweiten Client-Server-Verbindung eingesetzt werden, verwendet werden. Hierdurch können eventuell zusätzliche Funktionalitäten ermöglicht werden, die bei RDP über TCP/IP nicht möglich sind.

Bei dem erfindungsgemäßen Verfahren zum Betrieb eines Computernetzwerkes ist es vorgesehen, dass auf einer ersten Recheneinheit ein RDP-Server läuft. Auf einer zweiten Recheneinheit ist ein RDP-Client vorhanden. Es ist ein Datenaustausch über ein informationstechnisches Netzwerk zwischen der ersten und der zweiten Recheneinheit möglich. Ferner wird zwischen der ersten und der zweiten Recheneinheit eine RDP-konforme erste Client-Server-Verbindung zur Informationsaus- und/oder -eingabe aufgebaut. Über diese erste Client-Server-Verbindung kann der RDP-Client vom RDP-Server eine Session anfordern. Eine Session dient dazu, die Informationsaus- oder -eingabe auf der zweiten Recheneinheit zu ermöglichen. Abhängig von der exakten Ausführung des RDP-Servers laufen die wesentlichen Prozesse zum Verarbeiten der in der Session aufgerufenen Applikationen nicht auf der zweiten Recheneinheit selbst, sondern auf der ersten Recheneinheit, die den RDP-Server beinhaltet, ab.

Weiterhin ist zwischen der zweiten Recheneinheit und einer dritten Recheneinheit ein Datenaustausch über ein informationstechnisches Netzwerk möglich. Auf der zweiten Recheneinheit läuft ein weiterer Terminalserver in einem zum RDP unterschiedlichen Terminalserverprotokoll. Auf der dritten Recheneinheit ist ein Client für das zweite Terminalserverprotokoll vorhanden.

Beim erfindungsgemäßen Verfahren wird zwischen der zweiten und dritten Recheneinheit eine zweite Client-Server-Verbindung aufgebaut, welche auf dem zweiten Terminserverprotokoll basiert. Über diese Client-Server-Verbindung ist wiederum eine Informationsaus- und/oder -eingabe möglich. Über die zweite Client-Server-Verbindung werden Informationen von der zweiten Recheneinheit zu der dritten Recheneinheit übertragen, welche die zweite Recheneinheit über die erste Client-Server-Verbindung von der ersten Recheneinheit empfangen hat.

Durch eine entsprechende Auswahl des zweiten Terminalserverprotokolls kann somit die Funktionalität des RDP erweitert werden. Hierdurch ist es möglich, dass über die zweite Client-Server-Verbindung eine Session von der zweiten Recheneinheit auf die dritte Recheneinheit gespiegelt wird. Als mögliches Terminalserverprotokoll bietet sich herbei beispielsweise ein VNC-Derivat an.

Grundsätzlich ist das Spiegeln in der Session von der zweiten Recheneinheit nicht auf lediglich eine weitere Recheneinheit begrenzt. Es ist ebenso möglich, die Session auf mehrere weitere Recheneinheiten, die jeweils eine Client-Server-Verbindung mit der zweiten Recheneinheit aufbauen, vorzusehen.

Um zwei nebeneinander stehende Recheneinheiten beziehungsweise deren Bildschirme für eine Anzeige und Bearbeitung eines erweiterten Desktops vorzusehen, kann von der ersten Recheneinheit über die erste Client-Server-Verbindung zu der zweiten Recheneinheit ein erweiterter Desktop übertragen werden. Dieser würde beispielsweise explizit von der zweiten Recheneinheit über die erste Client-Server-Verbindung angefordert. Ein Teil dieses erweiterten Desktops wird auf einem Bildschirm der zweiten Recheneinheit ausgegeben. Ein anderer Teil des erweiterten Desktops wird über die zweite Client-Server-Verbindung an die dritte Recheneinheit übertragen. Dieser weitere Teil des erweiterten Desktops wird auch am Bildschirm der dritten Recheneinheit ausgegeben. Hierbei ist es auch möglich, dass die zweite Recheneinheit die Grafikverarbeitungseinrichtung für den weiteren Teil des erweiterten Desktops softwarebasiert emuliert.

Nachdem die zweite Recheneinheit die Daten für den erweiterten Desktop empfangen hat, analysiert sie die Daten und leitet einen Teil der Daten an eine in der zweiten Recheneinheit vorgesehene Grafikverarbeitungseinrichtung. Diese bereitet die Daten auf, damit sie auf dem Bildschirm der zweiten Recheneinheit dargestellt werden können. In ähnlicher Weise leitet die zweite Recheneinheit einen anderen Teil der Daten des erweiterten Desktops an eine zweite Grafikverarbeitungseinrichtung weiter. Diese kann zusätzlich physikalisch in der zweiten Recheneinheit vorgesehen sein. Die Ausgabe dieser zweiten Grafikverarbeitungseinrichtung wird über die zweite Client-Server-Verbindung zu der dritten Recheneinheit übertragen. Hierbei kann die Ausgabe der zweiten Grafikverarbeitungseinrichtung auch als Inhalt deren Grafikpuffers angesehen werden. Grundsätzlich ist es über eine derartige Auslegung auch möglich, einen erweiterten Desktop auf mehr als zwei Bildschirmen anzuzeigen. In ähnlicher Weise wie hier in Bezug auf die Ausgabe des erweiterten Desktops beschrieben wurde, kann auch die Eingabe auf dem erweiterten Desktop über die zwei Recheneinheiten verarbeitet werden.

Bei einer entsprechenden Auslegung des erfindungsgemäßen Systems ist es auch möglich, die beiden hier separat beschriebenen Erweiterungen der Funktionalität des RDPs zu kombinieren. So ist es möglich, mehrere erweiterte Desktops an einer prozesstechnischen Anlage vorzusehen, die jeweils dieselbe Session widerspiegeln.

Die Erfindung wird nachfolgend anhand von Ausführungsbeispielen und schematischen Zeichnungen näher erläutert. In diesen Zeichnungen zeigen:
- Fig. 1: eine schematische Darstellung des Aufbaus eines erfindungsgemäßen Compu- ternetzwerkes;
- Fig. 2: eine schematische Darstellung der Mirroring-Funktion des erfindungsgemäßen Computernetzwerks; und
- Fig. 3: eine schematische Darstellung der Funktionalität eines erweiterten Desktops auf zwei Recheneinheiten des erfindungsgemäßen Computernetzwerks.

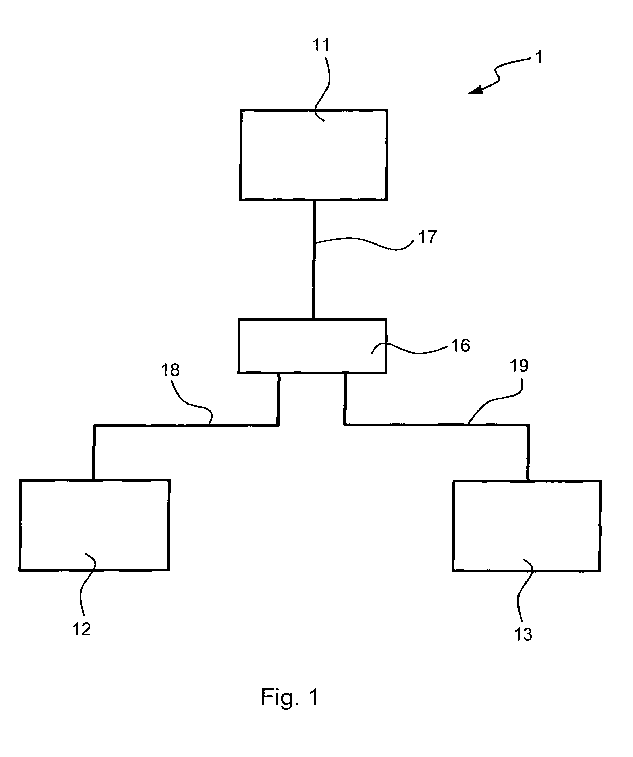

In Fig. 1 ist der Aufbau eines erfindungsgemäßen Computernetzwerks 1 dargestellt. Hierbei sind die erste Recheneinheit 11, die zweite Recheneinheit 12 und die dritte Recheneinheit 13 miteinander über ein informationstechnisches Netzwerk verbunden. Das informationstechnische Netzwerk ist in Fig. 1 als Sternverkabelung dargestellt. Hierbei führen Netzwerkverbindungen 17, 18 und 19 zu einem zentralen Switch 16. Grundsätzlich sind auch andere Verkabelungsstrukturen, wie in einem Bus-System, oder kaskadierende Systeme möglich.

Grundsätzlich dient das informationstechnische Netzwerk dazu, beliebige Daten zwischen den einzelnen Recheneinheiten 11, 12, 13 transferieren zu können. Hierbei muss zumindest eine Kommunikation zwischen der ersten Recheneinheit 11 und der zweiten Recheneinheit 12 sowie zwischen der zweiten Recheneinheit 12 und der dritten Recheneinheit 13 ermöglicht werden.

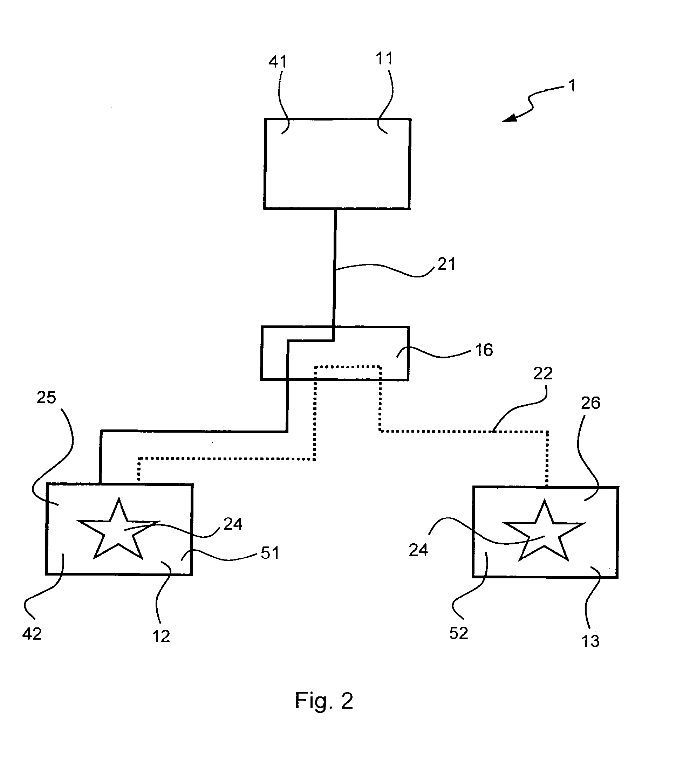

Im Folgenden wird anhand von Fig. 2 die Mirroring-Funktionalität des erfindungsgemäßen Computernetzwerks 1 näher erläutert. Hierbei sind keine Netzwerkverbindungen mehr wie in Fig. 1 dargestellt.

Auf der ersten Recheneinheit 11, welche beispielsweise ein zentraler Server sein kann, läuft ein RDP-Server 41. Auf der zweiten Recheneinheit 12, die beispielsweise durch eine robuste Ausführung eines Thin-Clients realisierbar ist, ist ein entsprechender RDP-Client 42 vorgesehen. Dieser RDP-Client 42 ist derart konfiguriert, dass er eine Session von dem RDP-Server 41, welcher auf der ersten Recheneinheit 11 vorgesehen ist, anfordern kann.

Hierzu wird eine erste Client-Server-Verbindung 21 zwischen dem RDP-Server 41 und dem RDP-Client 42 aufgebaut. Diese erste Client-Server-Verbindung 21 basiert auf dem RDP-Protokoll. Bei den RDP-Clients und dem RDP-Server handelt es sich bevorzugt um die Version 6.0, da diese Version viele für die Prozessautomatisierung notwendige Funktionen bereits beinhaltet.

Zusätzlich ist auf der zweiten Recheneinheit 21 ein Terminalserver 51 vorgesehen, der mit einem anderen zu RDP unterschiedlichen Terminalserverprotokoll arbeitet. Hierzu bieten sich beispielsweise VNC-Derivate an. Um eine Mirroring- oder Spiegelfunktion der Session der zweiten Recheneinheit 12 zu ermöglichen, muss dies von dem verwendeten zweiten Terminalserverprotokoll unterstützt werden.

Auf der dritten Recheneinheit 13 läuft ein Client 52 für das zweite Terminalserverprotokoll. Dieser Client 52 baut eine zweite Client-Server-Verbindung 22 zu dem Server 51 für das zweite Terminalserverprotokoll auf der zweiten Recheneinheit 12 auf. Über diese zweite Client-Server-Verbindung 22 wird nun die Mirroring-Funktionalität des zweiten Terminalserverprotokolls realisiert. Hierzu werden die Daten der Session der zweiten Recheneinheit 12 an die dritte Recheneinheit 13 übertragen. So kann derselbe Bildschirminhalt 24 auf den Bildschirmen der beiden Recheneinheiten 12 und 13 dargestellt werden. Sofern das verwendete Terminalserverprotokoll auch zur Übertragung von Eingaben auf dem Desktop ausgelegt ist, werden diese Eingaben über die zweite Client-Server-Verbindung 22 ebenfalls übertragen. Hierdurch wird ein komplettes Spiegeln der Session und damit des Desktops 25 auf den Desktop 26 der dritten Recheneinheit 13 erreicht.

Werden mehrere Recheneinheiten in Art der dritten Recheneinheit 13 vorgesehen, so ist es auch möglich die Session in der zweiten Recheneinheit 12 simultan auf mehreren Recheneinheiten darzustellen. Hierbei ist durch das Spiegeln derselben Bedienoberfläche auf vielen verschiedenen Recheneinheiten eine simultane Bedienung und Darstellung möglich.

Mit einer derartigen Konfiguration ist es möglich, bei großen industriellen Anlagen mehrere Ein- und Ausgabestationen vorzusehen, die jeweils dieselben Daten darstellen und über die dieselben Daten simultan bearbeitet werden können. Beispielsweise ist es möglich, ein Prozessabbild auf den gespiegelten Desktops 25, 26 darzustellen, in dem Mischer, Tanks, Leitungen und Ventile visualisiert sind. Aus diesem Prozessbild können dann relativ einfach entsprechende Statusinformationen ausgelesen werden. Da derselbe Desktop an mehreren Recheneinheiten zur Verfügung steht, kann das Auslesen und Beeinflussen der Prozesse flexibel an verschiedenen Positionen der industriellen Anlage durchgeführt werden.

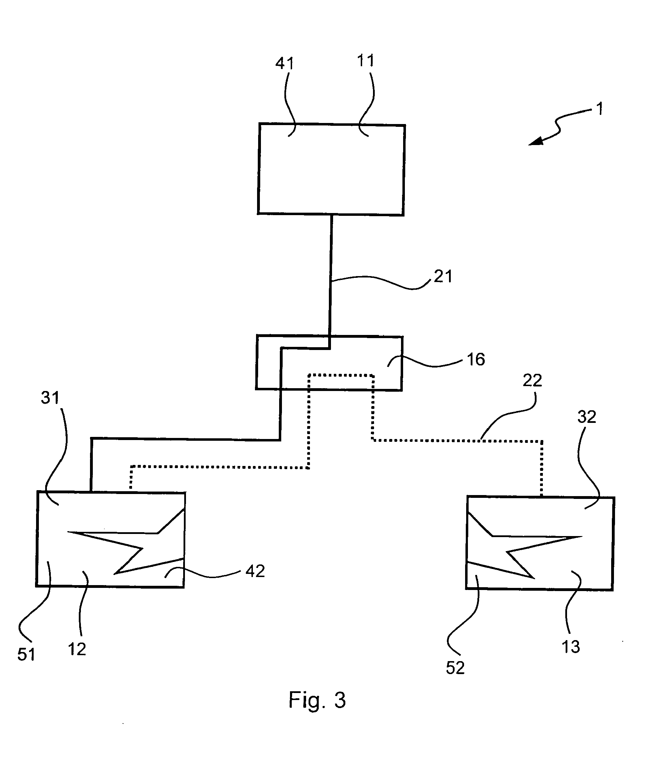

In Fig. 3 ist eine ähnliche schematische Darstellung wie in Fig. 2 gezeigt. Diese Darstellung in Fig. 3 dient dazu, die Funktionalität eines erweiterten Desktops auf zwei unterschiedlichen Recheneinheiten eines erfindungsgemäßen Computernetzwerkes 1 zu erläutern.

Hierbei ist wiederum auf der ersten Recheneinheit 11 ein RDP-Server 41 vorgesehen. In ähnlicher Weise, wie bereits in Bezug auf Fig. 2 beschrieben, ist auch auf der zweiten Recheneinheit 12 ein RDP-Client 42 eingerichtet. Dieser verbindet sich mit dem RDP-Server 41 der ersten Recheneinheit 11 und fordert einen so genannten erweiterten Desktop an.

Als erweiterter Desktop kann eine Bedienoberfläche bezeichnet werden, bei der mindestens zwei Bildschirme nebeneinander stehen und so ein gemeinsames, sich über die Bildschirmgrenzen hinweg erstreckendes Aus- und Eingabemedium darstellen. Soll beispielsweise auf den beiden nebeneinander stehenden Bildschirmen ein sich über die beiden Bildschirme erstreckender Desktop dargestellt werden, so stellt der erweiterte Desktop einen Desktop mit doppelter X-Auflösung dar. Hierbei wird ein erster Teil des Desktops auf dem ersten Bildschirm und der zweite Teil des Desktops auf dem zweiten Bildschirm dargestellt.

Im Rahmen der Prozessautomatisierung können derartige erweiterte Desktops eingesetzt werden, wenn die Prozessbilder so detaillreich sind, so dass sie auf einem Bildschirm nicht mehr ausreichend genau dargestellt werden können. Eine andere Verwendung eines erweiterten Desktops im Rahmen der Prozessautomatisierung ist beispielsweise, auf einem Teil des Desktops ein Prozessabbild darzustellen, und auf dem zweiten Teil des Desktops Statusinformationen zu Fehlern, Drehzahlen von Motoren, Flussgeschwindigkeiten, Alarmhistorien oder einen Verlauf von Größen, der diagrammartig angezeigt wird, auszugeben.

Herkömmlicherweise werden zur Darstellung eines erweiterten Desktops eine Recheneinheit mit zwei Grafikkarten und zwei Bildschirmen benötigt. Bei der Verwendung von Recheneinheiten in industriellen Bereichen, insbesondere im explosionsgeschützten Bereich, benötigen diese Recheneinheiten allerdings spezielle Zulassungen und stellen meist Spezialentwicklungen für Kleinserien dar. Daher lohnt es sich nicht, speziell für den Zweck des erweiterten Desktops Recheneinheiten zu entwickeln. Mit dem erfindungsgemäßen Computernetzwerk 1 können aber zwei Recheneinheiten 12 und 13 dazu verwendet werden, einen erweiterten Desktop zu simulieren.

Hierzu ist auf der zweiten Recheneinheit 12 ein Server 51 für ein zweites Terminalserverprotokoll vorgesehen. Auf der dritten Recheneinheit 13 ist ein Client 52 für das Terminalserverprotokoll vorgesehen. Dieser Client 52 verbindet sich mit dem Terminalserver 51, so dass eine zweite Client-Server-Verbindung 22 besteht.

Die zweite Recheneinheit 12 fragt über die erste Client-Server-Verbindung 21 einen erweiterten Desktop an. Ein Teil dieses Desktops 31 wird über eine Grafikverarbeitung der zweiten Recheneinheit 12 auf dem Bildschirm der zweiten Recheneinheit 12 dargestellt. Ein weiterer Teil 32 des erweiterten Desktops wird über eine zweite Grafikverarbeitung dem Server 51 für das zweite Terminalserverprotokoll zur Verfügung gestellt.

Über die Client-Server-Verbindung 22 wird dieser zweite Teil des erweiterten Desktops 32 an die dritte Recheneinheit 13 übertragen. Hier wird der zweite Teil 32 auf dem Bildschirm der dritten Recheneinheit 13 dargestellt. Wenn nun der Bildschirm der zweiten Recheneinheit 12 neben den Bildschirm der dritten Recheneinheit 13 gestellt wird, so ist die Funktionalität eines erweiterten Desktops 31, 32 gegeben. Hierzu wird der erste Teil des erweiterten Desktops 31 auf dem Bildschirm der zweiten Recheneinheit 12 und der zweite Teil des erweiterten Desktops 32 auf dem Bildschirm der dritten Recheneinheit 13 dargestellt.

Anders ausgedrückt, empfängt der RDP-Client 42 die Informationen für den erweiterten Desktop 31, 32. Der RDP-Client 42 verteilt die ankommenden Daten auf die entsprechenden Grafikkarten. Hierbei wird beispielsweise der linke Teil des erweiterten Desktops 31 an die in der zweiten Recheneinheit 12 befindliche Grafikverarbeitungseinrichtung, welche auch Grafikkarte genannt werden kann, übermittelt. Der zweite, in diesem Fall der linke Teil des erweiterten Desktops 32, wird einer zweiten Grafikkarte, welche virtuell ausgeführt sein kann, zugeleitet. Die Ausgabe dieser Grafikkarte, insbesondere deren Frame Buffer im Hauptspeicher, wird über die zweite Client-Server-Verbindung 22 der dritten Recheneinheit 13 zugeführt. Die dritte Recheneinheit 13 gibt die empfangenen Daten dann auf ihren Bildschirm aus.

Mit dem erfindungsgemäßen Computernetzwerk sowie dem Verfahren zu dem Betrieb des Computernetzwerkes ist es somit möglich, die Funktionalität des RDP-Protokolls zu erweitern, ohne selbst in das RDP-Protokoll einzugreifen.

## Patentansprüche

1. Computernetzwerk (1),
mit einer ersten (11), einer zweiten (12) und einer dritten (13) Recheneinheit, mit einem informationstechnischen Netzwerk, welches für einen Datenaustausch zumindest zwischen der ersten (11) und der zweiten (12) Recheneinheit und zwischen der zweiten (12) und der dritten (13) Recheneinheit eingerichtet ist,
wobei die erste Recheinheit (11) einen RDP-Server (41) und die zweite Recheinheit (12) einen RDP-Client (42) aufweist und
wobei die erste (11) und die zweite (12) Recheneinheit zum Aufbau und zum Betrieb einer RDP-konformen ersten Client-Server-Verbindung (21) eingerichtet sind,
**dadurch gekennzeichnet,**
**dass** die zweite (12) Recheneinheit einen Server (51) für ein zweites zu RDP unterschiedliches Terminalserverprotokoll aufweist,
**dass** die dritte (13) Recheneinheit einen Client (52) für das zweite Terminalserverprotokoll aufweist,
**dass** die zweite (12) und die dritte (13) Recheneinheit zum Aufbau und zum Betrieb einer zweiten Client-Server-Verbindung (22) basierend auf dem zweiten Terminalserverprotokoll eingerichtet sind, und
**dass** die zweite Recheneinheit (12) zum Übertragen von Informationen, welche von der ersten Recheneinheit (11) zu der zweiten Recheneinheit (12) über die erste Client-Server-Verbindung (21) übertragen werden, über die zweite Client-Server-Verbindung (22) zur dritten Recheneinheit (13) eingerichtet ist.

2. Computernetzwerk nach Anspruch 1
**dadurch gekennzeichnet,**
**dass** die zweite (12) und die dritte (13) Recheneinheit als Thin-Clients ausgeführt sind.

3. Computernetzwerk nach Anspruch 1 oder 2
**dadurch gekennzeichnet,**
**dass** das zweite Terminal-Server-Protokoll für ein Spiegeln einer auf der zweiten Recheneinheit (12) laufenden Session ausgelegt ist.

4. Computernetzwerk nach einem der Ansprüche 1 bis 3,
**dadurch gekennzeichnet,**
**dass** die zweite Recheneinheit (12) zwei Grafikverarbeitungseinrichtungen aufweist.

5. Computernetzwerk nach Anspruch 4,
**dadurch gekennzeichnet,**
**dass** eine Grafikverarbeitungseinrichtung auf der zweiten Recheneinheit (12) emuliert ausgeführt ist.

6. Computernetzwerk nach einem der Ansprüche 1 bis 5,
**dadurch gekennzeichnet,**
**dass** die zweite (12) und die dritte (13) Recheneinheit zum Verwenden eines Bildschirms der dritten Recheneinheit (13) als weiterer Bildschirm für die zweite Recheneinheit (12) ausgelegt sind und
**dass** die zweite Client-Server-Verbindung (22) eingerichtet ist, um die für die Verwendung des Bildschirms der dritten Recheneinheit (13) als weiterer Bildschirm für die zweite Recheneinheit (12) benötigten Daten zu übertragen.

7. Computernetzwerk nach einem der Ansprüche 1 bis 6,
**dadurch gekennzeichnet,**
**dass** die erste (11) und die zweite (12) Recheneinheit zum Be- und Verarbeiten von Daten für einen erweiterten Desktop (31, 32) über die erste Client-Server-Verbindung (21) ausgeführt sind und
**dass** die zweite (12) und die dritte (13) Recheneinheit zum Be- und Verarbeiten eines Teils der Daten für den erweiterten Desktop (31, 32) über die zweite Client-Server-Verbindung (22) ausgelegt sind.

8. Computernetzwerk nach einem der Ansprüche 1 bis 7,
**dadurch gekennzeichnet,**
**dass** das informationstechnische Netzwerk als ein auf Ethernet basierendes Netzwerk ausgeführt ist.

9. Verfahren zum Betrieb eines Computernetzwerks (1),
bei dem auf einer ersten Recheneinheit (11) ein RDP-Server (41) läuft, bei dem auf einer zweiten Recheneinheit (12) ein RDP-Client (42) vorhanden ist,
wobei ein Datenaustausch über ein informationstechnisches Netzwerk zumindest zwischen der ersten (11) und der zweiten (12) Recheneinheit ermöglicht wird und
bei dem zwischen der ersten (11) und der zweiten (12) Recheneinheit eine RDP-konforme erste Client-Server-Verbindung (21) zur Informationsaus-und/oder eingabe aufgebaut wird,
**dadurch gekennzeichnet,**
**dass** zwischen der zweiten (12) Recheneinheit und einer dritten (13) Recheneinheit ein Datenaustausch über ein informationstechnisches Netzwerk ermöglicht wird,
**dass** auf der zweiten Recheneinheit (12) ein Server (51) für ein zweites zu RDP unterschiedliches Terminalserverprotokoll läuft,
**dass** auf der dritten Recheneinheit (13) ein Client (52) für das zweite Terminalserverprotokoll vorhanden ist,
**dass** zwischen der zweiten (12) und der dritten (13) Recheneinheit eine zweite Client-Server-Verbindung (22), basierend auf dem zweiten Terminalserverprotokoll zur Informationsaus- und/oder -eingabe aufgebaut wird und
**dass** über die zweite Client-Server-Verbindung (22) Informationen von der zweiten Recheneinheit (12) zur dritten Recheneinheit (13) übertragen werden, welche von der zweiten Recheneinheit (12) über die erste Client-Server-Verbindung (21) von der ersten Recheneinheit (11) empfangen werden.

10. Verfahren nach Anspruch 9,
**dadurch gekennzeichnet,**
**dass** über die zweite Client-Server-Verbindung (22) eine Session auf der zweiten Recheneinheit (12) auf die dritte Recheneinheit (13) gespiegelt wird.

11. Verfahren nach Anspruch 9 oder 10,
**dadurch gekennzeichnet,**
**dass** auf der zweiten Recheneinheit (12) eine Grafikverarbeitungseinrichtung softwarebasiert simuliert wird.

12. Verfahren nach einem der Ansprüche 9 bis 11,
**dadurch gekennzeichnet,**
**dass** zu der zweiten Recheneinheit (12) über die erste Client-Server-Verbindung (21) ein erweiterter Desktop (31, 32) von der ersten Recheneinheit (11) übertragen wird,
**dass** ein Teil des erweiterten Desktops (31) auf einem Bildschirm der zweiten Recheneinheit (12) ausgegeben wird und
**dass** ein weiterer Teil des erweiterten Desktops (32) über die zweite Client-Server-Verbindung (22) auf einem Bildschirm der dritten Recheneinheit (13) ausgegeben wird.
